# FASCICULE DE BREVET EUROPEEN

(11) **EP 1 687 341 B1**
(45) Date de publication et mention de la délivrance du brevet: **04.05.2011**
(21) Numéro de dépôt: 04805858.0
(22) Date de dépôt: 25.11.2004
(51) Int. Cl.: C08J 9/28, C08F 2/32, C08L 25/08

(54) **MOUSSES POLYMERES DE TRES BASSE DENSITE ET LEUR PROCEDE DE FABRICATION.**
POLYMERSCHAUMSTOFFE SEHR NIEDRIGER DICHTE UND HERSTELLUNGSVERFAHREN DAFÜR
VERY LOW DENSITY POLYMER FOAMS AND METHOD FOR THE PRODUCTION THEREOF

(30) Priorité: 28.11.2003 FR 0350932
(43) Date de publication de la demande: 09.08.2006
(73) Titulaire: Commissariat à l'Énergie Atomique et aux Énergies Alternatives, 75015 Paris (FR)
(72) Inventeur: COLLIER, Remy, F-21000 Dijon (FR); VEDRENNE, Patrick, F-21000 Dijon (FR); LEBRUN, Edmond, F-21490 Bretigny (FR)
(74) Mandataire: Poulin, Gérard
(86) Numéro de dépôt international: PCT/FR2004/050616
(87) Numéro de publication internationale: WO 2005/052047

(56) Documents cités:
- WO-A-01/27165
- US-A- 5 728 743
- PATENT ABSTRACTS OF JAPAN vol. 0162, no. 77 (C-0954), 22 juin 1992 (1992-06-22) & JP 04 071603 A (KAO CORP), 6 mars 1992 (1992-03-06)

## Description

### DESCRIPTION

### DOMAINE TECHNIQUE

La présente invention se rapporte à des mousses polymères de très basse densité ainsi qu'à leur procédé de fabrication.

Les mousses selon l'invention sont des mousses "polyHIPE", c'est-à-dire des mousses obtenues par polymérisation d'une émulsion à phase interne hautement concentrée, qui se caractérisent, non seulement par une densité (ou masse volumique) particulièrement basse, mais également par un diamètre moyen de cellules très faible et par un très haut degré de pureté.

Elles sont donc particulièrement utiles pour la réalisation d'expériences dans le domaine de la physique des plasmas, et notamment comme cibles pour l'étude des phénomènes de fusion par confinement inertiel, mais également en tant que matériaux destinés à absorber une énergie (isolation thermique, phonique, mécanique, ...) ou des liquides, matériaux de filtration et de séparation de substances, supports d'imprégnation et/ou de libération contrôlée de substances (support de catalyseurs, support de principes actifs médicamenteux, ...) ou encore en tant que matériaux de remplissage de structures dont on souhaite alléger le poids.

### ETAT DE LA TECHNIQUE ANTERIEURE

Les mousses "polyHIPE" (Polymerised High Internal Phase Emulsion) sont des mousses polymères qui sont obtenues par polymérisation d'une émulsion composée, d'une part, d'une phase organique, dispersante, qui contient des monomères polymérisables et un agent tensio-actif en solution dans un solvant, et, d'autre part, d'une phase aqueuse, dispersée, qui représente au moins 74% du volume total de l'émulsion et qui renferme un initiateur de polymérisation desdits monomères.

Après élimination de l'eau présente dans le produit résultant de cette polymérisation, on obtient des mousses à cellules ouvertes qui correspondent à l'empreinte des bulles d'eau s'étant formées dans l'émulsion au cours de sa préparation, et qui sont interconnectées par des ouvertures de plus petite taille qu'elles, communément désignées sous le terme de pores.

Ces mousses présentent un rapport volume vide/volume plein élevé et, donc, une faible densité, ainsi qu'une structure cellulaire isotropique, sphérique et régulière, les rendant très différentes des mousses polymères classiquement obtenues par soufflage ou extrusion qui se caractérisent par une structure cellulaire anisotropique, orientée et irrégulière.

Compte tenu de leur caractéristiques, les mousses "polyHIPE" sont l'objet d'un intérêt croissant et leur utilisation a été proposée dans de nombreux domaines dont notamment la fabrication d'articles absorbants jetables (US-A-5,331,015 **[1]**), d'articles isolants (US-A-5,770,634 **[2]**) et de membranes et de dispositifs de filtration (WO-A-97/37745 **[3]**)

Les documents US-A-5,728,743 et WO-A-01/25165 décrivent des mousses à base de styrène, divinylbenzène et de monomère acrylique. Elles sont obtenues par polymérisation en émulsion à phase interne hautement concentrée.

Afin d'élargir encore leur potentiel d'applications, les Inventeurs se sont fixé pour but de fournir des mousses "polyHIPE" ayant une densité la plus basse possible, et pour cette densité, un diamètre moyen de cellules le plus faible possible, tout en présentant une tenue mécanique suffisante autorisant leur mise en forme par un usinage mécanique (tournage par exemple) ou par laser.

Ils se sont, de plus, fixé pour but de fournir des mousses "polyHIPE" qui aient, outre les propriétés précitées, un très haut degré de pureté et qui soient réalisables par un procédé simple à mettre en oeuvre et économiquement compatible avec une fabrication à une échelle industrielle.

### EXPOSÉ DE L'INVENTION

Ces buts, et d'autres encore, sont atteints par la présente invention qui propose une mousse "polyHIPE" formée d'un polymère réticulé exclusivement hydrocarboné, à base de monomères styréniques, et qui présente une densité au moins égale à 6 mg/cm³ et au plus égale à 20 mg/cm³ ainsi que des cellules d'un diamètre moyen au plus égal à 20 microns.

Selon une première disposition avantageuse de l'invention, le polymère est un copolymère de styrène et de divinylbenzène.

Ce copolymère peut notamment être obtenu à partir de monomères de styrène et de divinylbenzène commercialement disponibles, auquel cas le divinyl-benzène est constitué d'un mélange des trois formes isomériques ortho, méta et para avec une prédominance de la forme méta.

Avantageusement, dans ce copolymère, le rapport massique du styrène au divinylbenzène est compris entre 4 et 1 et, mieux encore, égal à 1.

Conformément à l'invention, la mousse présente, préférentiellement, un diamètre moyen de cellules compris entre 2 et 10 microns.

Selon une autre disposition avantageuse de l'invention, la mousse présente un taux massique d'impuretés inférieur à 3%, c'est-à-dire que les éléments présents dans cette mousse autres que le carbone et l'hydrogène constitutifs du polymère, représentent moins de 3% en masse de la masse de ladite mousse.

Une mousse conforme à l'invention peut notamment être obtenue en utilisant, dans un procédé de polymérisation en émulsion à phase interne hautement concentrée :
- un agent porogène, en l'espèce de l'éthylbenzène, qui, en même temps, est un solvant des monomères styréniques sans être un solvant du polymère résultant,
- du monooléate de sorbitan, qui présente une balance hydrophile/lipophile de 4,3, en tant qu'agent tensio-actif, et
- du persulfate de sodium en tant qu'initiateur de polymérisation desdits monomères, l'utilisation conjointe de ces trois agents s'étant, en effet, révélée permettre la réalisation d'une émulsion très concentrée, c'est-à-dire d'une émulsion dans laquelle la phase aqueuse dispersée représente au moins 96% du volume total de cette émulsion.

Aussi, l'invention a-t-elle également pour objet un procédé de fabrication d'une mousse polyHIPE telle que précédemment définie, qui comprend les étapes suivantes :
a) réaliser une émulsion entre une phase organique comprenant des monomères styréniques exclusivement hydrocarbonés et du monooléate de sorbitan dans de l'éthylbenzène, et une phase aqueuse comprenant un électrolyte et du persulfate de sodium, le volume de la phase aqueuse représentant au moins 96% du volume total des deux phases ;
b) polymériser lesdits monomères jusqu'à obtention d'une mousse solide ; et
c) laver la mousse obtenue à l'étape b) et la soumettre à un séchage au CO₂ supercritique.

Selon une disposition avantageuse de ce procédé, les monomères styréniques présents dans la phase organique sont des monomères de styrène et de divinylbenzène, dans un rapport massique compris entre 4 et 1 et, mieux encore, égal à 1.

Ces monomères représentent avantageusement de 40 à 60% en masse de la masse de la phase organique, tandis que le monooléate de sorbitan représente de 20 à 30% en masse de la masse de cette phase organique.

L'électrolyte présent dans la phase aqueuse, dont le rôle est de stabiliser l'émulsion en modifiant les propriétés du monooléate de sorbitan, est, de préférence, du sulfate d'aluminium et représente avantageusement de 0,1 à 2% en masse de la masse de cette phase aqueuse. Toutefois, cet électrolyte peut aussi être choisi parmi différents autres sels, par exemple d'aluminium, de cuivre ou de sodium.

Le persulfate de sodium représente, lui, préférentiellement de 0,1 à 2% en masse de la masse de la phase aqueuse.

Par ailleurs, on préfère utiliser, dans la phase aqueuse, de l'eau ultrapure, notamment une eau de résistivité proche ou égale à 18,2 mégaohms (MΩ), obtenue, par exemple, par nanofiltration, ultrafiltration, échange ionique ou par distillation, le niveau de pureté de l'eau utilisée ayant, en effet, une influence, sur la pureté de la mousse obtenue.

Conformément à l'invention, l'émulsion entre la phase organique et la phase aqueuse est réalisée, par exemple dans un réacteur muni d'un arbre d'agitation, en ajoutant, progressivement et sous agitation modérée, la phase aqueuse à la phase organique déjà présente dans le réacteur, puis en soumettant l'ensemble à une agitation plus vive, correspondant par exemple à une vitesse de rotation de l'arbre de 300 tours/min, jusqu'à obtention d'une émulsion stable. Une émulsion stable est généralement obtenue en maintenant l'agitation pendant 60 à 90 minutes.

La polymérisation des monomères est réalisée, de préférence, à chaud, c'est-à-dire à une température de l'ordre de 30 à 70°C, par exemple dans une étuve. Elle peut éventuellement être conduite après avoir placé l'émulsion dans un récipient hermétiquement fermé afin d'éviter une éventuelle contamination de cette émulsion au cours de cette étape. Le temps nécessaire pour que la polymérisation des monomères conduise à une mousse solide est généralement de l'ordre de 12 à 48 heures.

Selon une autre disposition avantageuse de l'invention, le lavage de la mousse comprend un ou plusieurs lavages à l'eau, de préférence, ultrapure, suivis de plusieurs lavages avec des mélanges eau/alcool de titre croissant en alcool, eux-même suivis par d'un ou plusieurs lavages à l'alcool. L'alcool utilisé au cours de ces lavages est, de préférence, de l'éthanol.

Conformément à l'invention, la mousse, une fois lavée, est soumise à un séchage au CO₂ supercritique, cette technique de séchage permettant, en effet, d'extraire totalement le solvant de la mousse sans détruire la structure solide de cette mousse.

D'autres caractéristiques et avantages de l'invention apparaîtront mieux à la lecture du complément de description qui suit, qui est donnée bien entendu à titre illustratif et non-limitatif, et en référence aux dessins annexés.

### BRÈVE DESCRIPTION DES DESSINS

La figure 1 représente trois photographies prises au microscope électronique à balayage sur un échantillon d'une mousse conforme à l'invention, la partie A correspondant à un grossissement de X30,4, la partie B à un grossissement de X126 et la partie C à un grossissement de X1940.
La figure 2 représente, sous forme d'un histogramme, la fréquence (F) des cellules d'un échantillon d'une mousse conforme à l'invention en fonction de leur diamètre (D), exprimé en microns.
La figure 3 représente, sous forme d'un histogramme, la fréquence (F) des pores d'un échantillon d'une mousse conforme à l'invention en fonction de leur diamètre (D), exprimé en microns.

### EXPOSÉ DÉTAILLÉ D'UN MODE DE RÉALISATION PARTICULIER

On réalise un lot d'échantillons d'une mousse polymère conforme à l'invention en suivant le protocole opératoire ci-après.

Dans un premier temps, on prépare une phase organique comprenant 2,25 g de styrène, 2,25 g de divinylbenzène et 2,33 g de monooléate de sorbitan dans 4,28 g d'éthylbenzène, tous ces composés provenant de la société Aldrich.

On introduit cette phase organique dans la cuve d'un réacteur de chimie en verre à double enveloppe dans laquelle circule un fluide caloporteur, en l'espèce de l'eau maintenue à 20°C par un bain thermostaté. Le réacteur est refermé par un couvercle étanche percé de 4 rodages dont un rodage central permet le passage d'un arbre d'agitation et deux rodages latéraux servent à connecter le réacteur respectivement à l'extrémité d'une ampoule de coulée isobare et à une pompe à vide.

On prépare parallèlement une phase aqueuse comprenant 0,102 g de sulfate d'aluminium (société Aldrich) et 2,5 g de persulfate de sodium (société Aldrich) dans 290 ml d'eau ultrapure, de résistivité égale à 18,2 MΩ.

Cette phase aqueuse est introduite dans la cuve du réacteur par l'intermédiaire de l'ampoule de coulée isobare et la vitesse de rotation de l'arbre d'agitation est portée à 300 tours/min en 30 secondes. Cette agitation est maintenue pendant 70 minutes, puis le réacteur est placé sous vide partiel (109 mbars) à l'aide de la pompe à vide. L'agitation est encore poursuivie pendant 5 minutes, puis stoppée et le vide est cassé après 4 minutes de repos.

L'émulsion ainsi formée dans le réacteur est répartie dans une série de tubes en verre au moyen d'une spatule.

Ces tubes sont introduits dans des sacs plastiques contenant 1 cm³ d'eau ultrapure. Les sacs sont fermés par soudure et placés dans une étuve à 60°C pendant 17 heures au terme desquelles les tubes sont retirés de l'étuve et laissés à refroidir jusqu'à ce que leur température soit égale à la température ambiante.

Les échantillons de mousse contenus dans les tubes en verre en sont extraits manuellement puis placés dans un bécher rempli d'eau ultrapure. L'eau est changée 3 fois en 24 heures.

Ils sont alors transférés dans un bécher contenant 25% d'éthanol et 75% d'eau ultrapure. Le titre en éthanol est ensuite porté à 100% par paliers de 25% sur une période de 4 jours.

Après extraction du bécher, les échantillons de mousse sont séchés dans un sécheur à CO₂ supercritique.

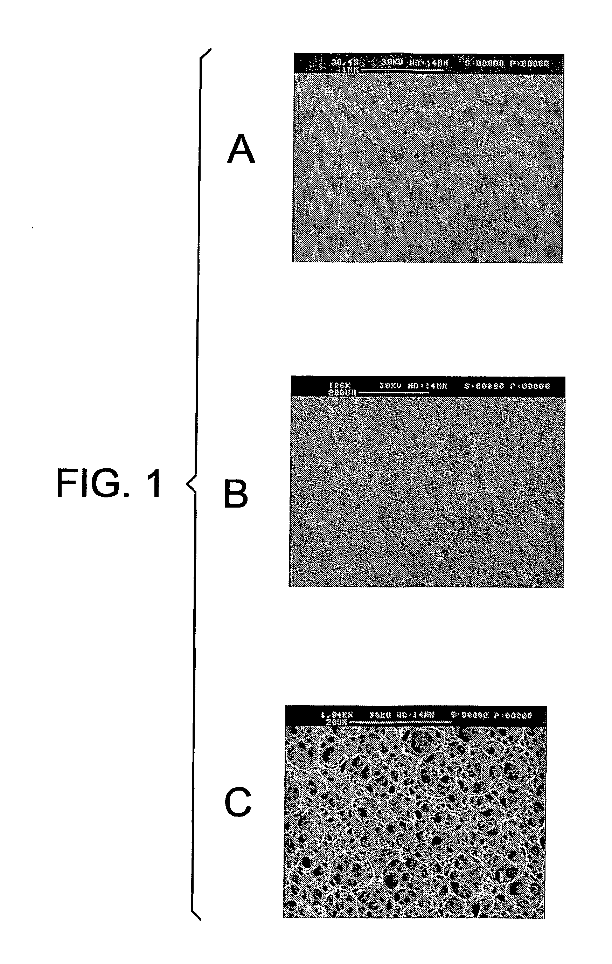

Les échantillons de mousse ainsi réalisés se caractérisent par :
* une densité moyenne de 17,2 mg/cm³ ± 1,7 mg/cm³,
* une structure très homogène, comme le montre la figure 1 qui représente trois photographies prises au microscope électronique à balayage, respectivement à un grossissement de X30,4 (partie A), X126 (partie B) et X1940 (partie C), sur un échantillon de mousse,
* un diamètre moyen de cellules de 6,30 µm
   ± 1,81 µm,
* un diamètre moyen de pores de 1,35 µm ± 0,88 µm, et
* un taux massique d'impuretés (éléments autres que le carbone et l'hydrogène) inférieur à 3% (% massiques . C = 92,3 + 0,5% ; H = 7,90 ± 0,3% ; O = 1,10 ± 0,3% ; ppm : S = 50 ppm ; Na = 3 ppm ; Al = 336 ppm).

La densité a été déterminée en soumettant deux échantillons pris au hasard, d'une part, à une mesure dimensionnelle au moyen d'un pied à coulisse numérique (incertitude de mesure : ± 10 µm), et, d'autre part, à une pesée (incertitude de mesure :
± 10 µg)

Les diamètres moyens des cellules et des pores ont été déterminés sur respectivement 82 cellules et 837 pores au moyen d'un logiciel d'analyse d'images à partir d'images obtenues par microscopie électronique à balayage.

Le taux massique d'impuretés a été, lui, déterminé par analyse élémentaire.

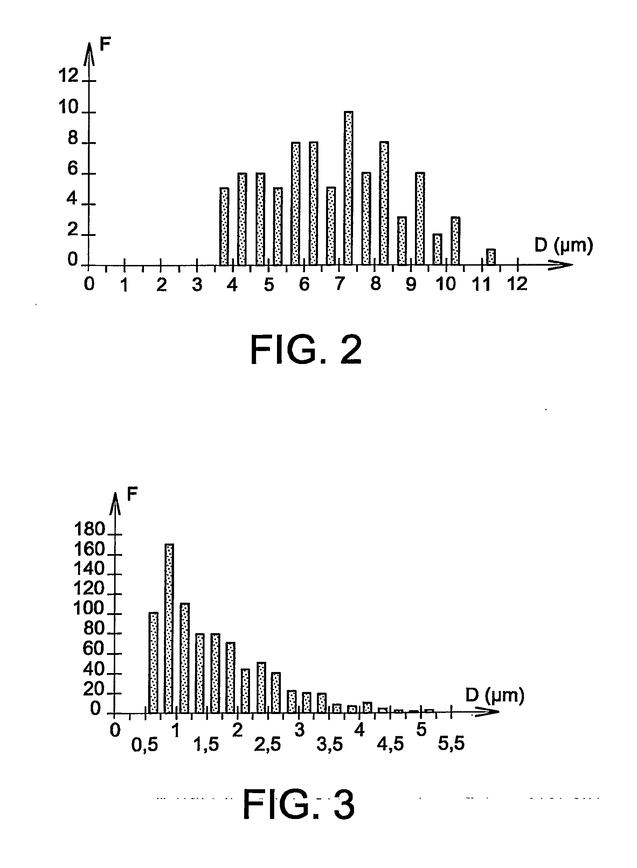

La figure 2 illustre, sous la forme d'un histogramme, la fréquence (F) de ces cellules en fonction de leur diamètre (D), exprimé en µm, tandis que la figure 3 illustre, également sous la forme d'un histogramme, la fréquence (F) de ces pores en fonction de leur diamètre (D), également exprimé en µm.

## Revendications

1. Mousse polymère obtenue par polymérisation en émulsion à phase interne hautement concentrée, qui est formée d'un polymère réticulé exclusivement hydrocarboné, à base de monomères styréniques, et qui présente une densité au moins égale à 6 mg/cm³ et au plus égale à 20 mg/cm³ ainsi que des cellules d'un diamètre moyen au plus égal à 20 microns.

2. Mousse polymère selon la revendication 1, dans laquelle le polymère est un copolymère de styrène et de divinylbenzène.

3. Mousse polymère selon la revendication 2, dans laquelle le rapport massique du styrène au divinylbenzène dans le copolymère est compris entre 4 et 1 et, de préférence, égal à 1.

4. Mousse polymère selon l'une quelconque des revendications précédentes, qui présente un diamètre moyen de cellules compris entre 2 et 10 microns.

5. Mousse polymère selon l'une quelconque des revendications précédentes, dans laquelle les éléments autres que le carbone et l'hydrogène constitutifs du polymère représentent moins de 3% en masse de la masse de la mousse.

6. Procédé de fabrication d'une mousse polymère selon l'une quelconque des revendications 1 à 5, qui comprend les étapes suivantes :
a) réaliser une émulsion entre une phase organique comprenant des monomères styréniques exclusivement hydrocarbonés et du monooléate de sorbitan dans de l'éthylbenzène, et une phase aqueuse comprenant un électrolyte et du persulfate de sodium, le volume de la phase aqueuse représentant au moins 96% du volume total des deux phases ;
b) polymériser lesdits monomères jusqu'à obtention d'une mousse solide ;
c) laver la mousse obtenue à l'étape b) et la soumettre à un séchage au CO₂ supercritique.

7. Procédé selon la revendication 6, dans lequel les monomères styréniques présents dans la phase organique sont des monomères de styrène et de divinylbenzène.

8. Procédé selon la revendication 7, dans lequel le rapport pondéral des monomères du styrène aux monomères du divinylbenzène est compris entre 4 et 1 et, de préférence, égal à 1.

9. Procédé selon l'une quelconque des revendications 6 à 8, dans lequel les monomères styréniques représentent de 40 à 60% en masse de la masse de la phase organique.

10. Procédé selon l'une quelconque des revendications 6 à 9, dans lequel le monooléate de sorbitan représente de 20 à 30% en masse de la masse de la phase organique.

11. Procédé selon l'une quelconque des revendications 6 à 10, dans lequel l'électrolyte est du sulfate d'aluminium.

12. Procédé selon l'une quelconque des revendications 6 à 11, dans lequel l'électrolyte représente de 0,1 à 2% en masse de la masse de la phase aqueuse.

13. Procédé selon l'une quelconque des revendications 6 à 12, dans lequel le persulfate de sodium représente de 0,1 à 2% en masse de la masse de la phase aqueuse.

14. Procédé selon l'une quelconque des revendications 6 à 13, dans lequel l'eau présente dans la phase aqueuse est de l'eau ultrapure.

15. Procédé selon la revendication 14, dans lequel l'eau ultrapure présente dans la phase aqueuse a une résistivité d'environ 16,2 mégaohms.

16. Procédé selon l'une quelconque des revendications 6 à 15, dans lequel la polymérisation des monomères est conduite à une température allant de 30 à 70°C.

17. Procédé selon l'une quelconque des revendications 6 à 16, dans lequel le lavage de la mousse comprend un ou plusieurs lavages à l'eau, suivis de plusieurs lavages avec des mélanges eau/alcool de titre croissant en alcool, eux-même suivis d'un ou plusieurs lavages à l'alcool.

## Claims

1. A Polymer foam obtained by highly concentrated internal phase emulsion polymerization, which is formed from a crosslinked, exclusively hydrocarbon, polymer based on styrenic monomers and which exhibits a density at least equal to 6 mg/cm³ and at most equal to 20 mg/cm³ and cells with a mean diameter at most equal to 20 microns.

2. The polymer foam as claimed in claim 1, in which the polymer rs s a copolymer of styrene and of divinylbenzene.

3. The polymer foam as claimed in claim 2, in which the ratio by weight of the styrene to the divinylbenzene in the copolymer is between 4 and 1 and is preferably equal to 1.

4. The polymer foam as claimed in any one of the preceding claims, which exhibits a mean cell diameter of between 2 and 10 microns.

5. The polymer foam as claimed in any one of the preceding claims, in which the elements other than the constituent carbon and the constituent hydrogen of the polymer represent less than 3% by weight of the weight of the foam.

6. A process for the manufacture of a polymer foam as claimed in any one of claims 1 to 5, which comprises the following stages :
a) producing an emulsion between an organic phase comprising exclusively hydrocarbon styrenic monomers and sorbitan monooleate in ethylbenzene and an aqueous phase comprising an electrolyte and sodium persulfate, the volume of the aqueous phase representing at least 96% of the total volume of the two phases;
b) polymerizing said monomers until a solid foam is obtained;
c) washing the foam obtained in stage b) and subjecting it to drying with supercritical CO₂,

7. The process as claimed in claim 6, in which the styrenic monomers present in the organic phase are styrene and divinylbenzene monomers.

8. The process as claimed in claim 7, in which the ratio by weight of the styrene monomers to the divinylbenzene monomers is between 4 and 1 and is preferably equal to 1.

9. The process as claimed in any one of claims 6 to 8, in which the styrenic monomers represent from 40 to 60% by weight of the weight of the organic phase.

10. The process as claimed in any one of claims 6 t o 9, in which the sorbitan monooléate represents from 20 to 30% by weight of the weight of the organic phase.

11. The process as claimed in any one of claims 6 to 10, in which the electrolyte is aluminum sulfate.

12. The process as claimed in any one of claims 6 to 11, in which the electrolyte represents from 0.1 to 2% by weight of the weight of the aqueous phase.

13. The process as claimed in any one of claims 6 to 12, in which the sodium persulfate represents from 0.1 to 2% by weight of the weight of the aqueous phase.

14. The process as claimed in any one of claims 6 to 13, in which the water present in the aqueous phase is ultrapure water.

15. The process as claimed in claim 14, in which the ultrapure water present in the aqueous phase has a resistivity of approximately 16.2 megaohms.

16. The process as claimed in any one of claims 6 to 15, in which the polymerization of the monomers is carried out at a temperature ranging from 30 to 70°C.

17. The process as claimed in any one of claims 6 to 16, in which the washing of the foam comprises one or more washing operations with water, followed by several washing operations with water/alcohol mixtures with an increasing content of alcohol, themselves followed by one or more washing operations with the alcohol.

## Patentansprüche

1. Polymerschaumstoff, der durch Emulsionspolymerisation mit hoch konzentrierter interner Phase erhalten wird und aus einem vernetzten, ausschließlich kohlenwasserstoffhaltigen Polymer auf Basis von Styrolmonomeren gebildet ist und eine Dichte von mindestens 6 mg/cm³ und höchstens 20 mg/cm³ sowie Zellen mit einem mittleren Durchmesser von höchstens 20 µm aufweist.

2. Polymerschaumstoff nach Anspruch 1, wobei das Polymer ein Styrol-Divinylbenzol-Copolymer ist.

3. Polymerschaumstoff nach Anspruch 2, wobei das Masseverhältnis von Styrol zu Divinylbenzol in dem Copolymer zwischen 4 und 1 liegt und vorzugsweise gleich 1 ist.

4. Polymerschaumstoff nach einem der vorangehenden Ansprüche, bei dem der mittlere Durchmesser der Zellen zwischen 2 und 10 µm beträgt.

5. Polymerschaumstoff nach einem der vorangehenden Ansprüche, wobei die das Polymer bildenden weiteren Elemente, außer Kohlenstoff und Wasserstoff, einen Massenanteil von zumindest 3 % im Schaumstoff darstellen.

6. Verfahren zum Herstellen von Polymerschaumstoff nach einem der Ansprüche 1 bis 5, das die folgenden Schritte umfasst:
a) Erzeugen einer Emulsion zwischen einer organischen Phase mit ausschließlich kahlenwasserstoffhaftigen Styrolmonomeren und Sorbitanmonooleat in Ethylbenzol und einer wässrigen Phase mit einem Elektrolyt und Natriumpersulfat, wobei das Volumen der wässrigen Phase zumindest 96 % des Gesamtvolumens der beiden Phasen ausmacht;
b) Polymerisieren der Monomere bis zum Erhalt eines festen Schaumstoffs;
c) Spülen des in Schritt b) erhaltenen Schaumstoffs und Durchführen einer Trocknung unter superkritischem CO₂.

7. Verfahren nach Anspruch 6, wobei die in der organischen Phase enthaltenen Styrolmonomere Monomere aus Styrol und Divinylbenzol sind.

8. Verfahren nach Anspruch 7, wobei das Gewichtsverhältnis der Styrolmonomeren zu den Divinylbenzolmonomeren zwischen 4 und 1 liegt und vorzugsweise gleich 1 ist.

9. Verfahren nach einem der Ansprüche 6 bis 8, wobei die der Masseanteil der Styrolmonomere zwischen 40 und 60 % der Masse der organischen Phase ausmacht.

10. Verfahren nach einem der Ansprüche 6 bis 9, wobei der Massenanteil von Sorbitanmonooleat 20 bis 30 % der Masse der organischen Phase ausmacht.

11. Verfahren nach einem der Ansprüche 6 bis 10, wobei der Elektrolyt Aluminiumsulfat ist.

12. Verfahren nach einem der Ansprüche 6 bis 11, wobei der Massenanteil des Elektrolyts 0,1 bis 2 % der Masse der wässrigen Phase ausmacht.

13. Verfahren nach einem der Ansprüche 6 bis 12, wobei der Masseanteil von Sodiumpersulfat 0,1 bis 2 % der Masse der wässrigen Phase ausmacht.

14. Verfahren nach einem der Ansprüche 6 bis 13, wobei das in der wässrigen Phase vorhandene Wasser ultrareines Wasser ist.

15. Verfahren nach Anspruch 14, wobei das in der wässrigen Phase vorhandene ultrareine Wasser einen spezifischen Widerstand von etwa 16,2 Megaohm hat.

16. Verfahren nach einem der Ansprüche 6 bis 15, wobei die Polymerisation der Monomere bei einer Temperatur von 30 bis 70° C durchgeführt wird.

17. Verfahren nach einem der Ansprüche 6 bis 16, wobei das Spülen des Schaumstoffs eine oder mehrere Spülungen mit Wasser, gefolgt von mehreren Spülungen mit Wasser/Alkohol-Gemischen bei steigendem Gehalt an Alkohol, ihrerseits gefolgt von einer oder mehreren Spülungen mit Alkohol, umfasst.
